# EUROPÄISCHE PATENTSCHRIFT

(11) **EP 3 348 419 B1**
(45) Veröffentlichungstag und Bekanntmachung des Hinweises auf die Patenterteilung: **18.11.2020**
(21) Anmeldenummer: 17151456.5
(22) Anmeldetag: 13.01.2017
(51) Int. Cl.: B44C 1/24, B44C 5/04

(54) **DEKORIERTES OBERFLÄCHENSTRUKTURIERTES WAND- ODER BODENPANEEL AUF BASIS EINER FASERZEMENTPLATTE**
DECORATED SURFACE STRUCTURED WALL OR FLOOR PANEL BASED ON FIBRE CEMENT BOARD
PANNEAU DE SOL OU MURAL À SURFACE STRUCTURÉE ET DÉCORÉE À BASE D'UNE PLAQUE EN FIBROCIMENT

(43) Veröffentlichungstag der Anmeldung: 18.07.2018
(73) Patentinhaber: Akzenta Paneele + Profile GmbH, 56759 Kaisersesch (DE)
(72) Erfinder: Hannig, Hans-Jürgen, 51427 Bergisch Gladbach (DE)
(74) Vertreter: Michalski Hüttermann & Partner Patentanwälte mbB

(56) Entgegenhaltungen:
- EP-A1- 2 314 462
- EP-A1- 2 927 017
- WO-A1-2012/001109
- DE-A1-102012 022 461
- DE-A1-102014 014 912
- DE-U1-202011 107 844

## Beschreibung

Die vorliegende Erfindung betrifft ein dekoriertes und oberflächenstrukturiertes Wand- oder Bodenpaneel auf Basis einer Faserzementplatte. Die vorliegende Erfindung betrifft ferner ein Verfahren zum Herstellen eines dekorierten und oberflächenstrukturierten Wand- oder Bodenpaneels auf Basis einer Faserzementplatte.

Dekorierte Paneele sind an sich bekannt, wobei unter dem Begriff Wandpaneel auch Paneele zu verstehen sind, die zur Decken- oder Türbekleidung geeignet sind. Sie bestehen üblicherweise aus einem Träger beziehungsweise Kern aus einem festen Material, beispielsweise einem Holzwerkstoff, der auf mindestens einer Seite mit einer Dekorschicht und einer Deckschicht sowie gegebenenfalls mit weiteren Schichten, beispielsweise einer zwischen Dekor- und Deckschicht angeordneten Verschleißschicht, versehen ist. Die Dekorschicht ist üblicherweise ein gedrucktes Papier, das mit einem Harz imprägniert ist oder eine Druckschicht, die auf den Träger etwa unter Verwendung eines geeigneten Druckuntergrunds aufgebracht ist.

Aus dem Dokument EP 2 829 415 A1 ist ein Verfahren zur Herstellung eines dekorierten Wand- oder Bodenpaneels bekannt, bei dem ausgehend von einem granularen Trägermaterial ein Träger und anschließend ein Paneel geformt wird. Bei einem derartigen Verfahren kann beispielsweise ein WPC als Trägermaterial Verwendung finden. EP 2 927 017 A1 offenbart ein Dekorpaneel gemäß dem Oberbegriff von Anspruch 1 und ein entsprechendes Herstellungsverfahren.

Paneele auf Basis von Holzwerkstoffen haben gegenüber mineralischen Wand- oder Bodenbedeckungen wie Fliesen eine höhere Brandlast, wodurch ihr Einsatzbereich teilweise eingeschränkt ist. Demgegenüber sind die bekannten mineralischen Wand- oder Bodenbedeckungen hinsichtlich ihrer Dekorvielfalt eingeschränkt.

Die Herstellung der Paneele sowie die Paneele selbst bieten diesbezüglich noch Verbesserungspotential. Verbesserungspotential kann sich dabei insbesondere bezüglich der Anwendbarkeit des Endverbrauchers bieten.

Zur Verbesserung des realistischen Eindrucks der Paneele ist es aus dem Stand der Technik bekannt, diese mit einer Oberflächenstruktur zu verstehen, um einen einem natürlichen Material nachempfundenen haptischen Effekt zu erzielen. Dabei kann es beispielsweise vorgesehen sein, dass bei einem Holzdekor die Struktur der Maserung durch eine mit der optischen Darstellung der Holzmaserung übereinstimmende Oberflächenstruktur ausgebildet wird.

Es ist daher die Aufgabe der vorliegenden Erfindung, einen oberflächenstrukturiertes dekoriertes Wand- oder Bodenpaneel bereitzustellen, das bei guten Eigenschaften insbesondere hinsichtlich seiner Brandeigenschaften eine verbesserte Anwendbarkeit ermöglicht. Darüber hinaus ist es die Aufgabe der vorliegenden Erfindung, ein Verfahren zur Herstellung eines oberflächenstrukturiertes dekoriertes Wand- oder Bodenpaneel auf Basis einer Faserzementplatte anzugeben.

Gelöst wird diese Aufgabe durch ein dekortiertes und oberflächenstrukturiertes Paneele mit den Merkmalen des Anspruchs 1. Gelöst wird diese Aufgabe ferner durch ein Verfahren mit den Merkmalen des Anspruchs 10 Bevorzugte Ausgestaltungen der Erfindung sind in den Unteransprüchen, in der Beschreibung oder den Figuren angegeben, wobei weitere in den Unteransprüchen oder in der Beschreibung oder den Figuren beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Im Sinne dieser Erfindung ist eine Faserzementplatte eine aus einem geeigneten Zement unter Zuschlag eines Fasermaterial sowie ggf. eines Füllstoffes und/oder Feststoffmaterials erstellte Platte.

Mit der Erfindung wird ein dekoriertes Wand- oder Bodenpaneel aufweisend
- eine Trägerplatte aus einem Faserzementmaterial,
- eine auf einer Oberfläche der Trägerplatte angeordnete Primer-Schicht,
- eine auf der Primer-Schicht angeordnete Dekorschicht,
- eine auf der Dekorschicht angeordnete Schicht eines strahlungshärtbaren Lackes,
- eine auf der Schicht eines strahlungshärtbaren Lackes oder Hotmelts angeordnete strukturierte Kunststofffolie, sowie
- eine auf der strukturierten Kunststofffolie angeordnete Decklackschicht.

Unter dem Begriff "dekoriertes Wand- oder Bodenpaneel" beziehungsweise "Dekorpaneel" sind im Sinne der Erfindung insbesondere Wand-, Decken, Tür- oder Bodenpaneele zu verstehen, welche ein auf eine Trägerplatte aufgebrachtes eine Dekorvorlage nachbildendes Dekor aufweisen. Dekorpaneele werden dabei in vielfältiger Weise sowohl im Bereich des Innenausbaus von Räumen, als auch zur dekorativen Verkleidung von Bauten, beispielsweise im Messebau, verwendet. Die Dekorpaneele weisen dabei vielfach ein Dekor auf, welches einen Naturwerkstoff nachempfinden soll.

Beispiele für solche nachempfundenen Naturwerkstoffe beziehungsweise Dekorvorlagen sind Holzarten wie beispielsweise Ahorn, Eiche, Birke, Kirsche, Esche, Nussbaum, Kastanie, Wenge oder auch exotische Hölzer wie Panga-Panga, Mahagoni, Bambus und Bubinga.

Darüber hinaus werden vielfach Naturwerkstoffe wir Steinoberflächen oder Keramikoberflächen nachempfunden.

Entsprechend kann unter einer "Dekorvorlage" im Sinne der vorliegenden insbesondere verstanden werden ein derartiger originaler Naturwerkstoff beziehungsweise zumindest eine Oberfläche eines solchen, der durch das Dekor imitiert beziehungsweise nachempfunden werden soll.

Unter einem "Träger" bzw. Einer "Trägerplatte" kann insbesondere eine in einem fertig gestellten Paneel als Kern beziehungsweise als Basislage dienende Lage verstanden werden. Beispielsweise kann der Träger dem Paneel bereits eine geeignete Stabilität verleihen oder zu dieser beitragen.

Entsprechend kann unter einem Trägermaterial ein derartiges Material verstanden werden, welches den Träger zumindest zu einem mehrwiegenden Teil bildet. Insbesondere kann der Träger aus dem Trägermaterial bestehen.

Als Trägermaterial ist dabei erfindungsgemäß ein Faserzement vorgesehen, aus welchen mittels geeigneter Verfahren, wie beispielsweise dem Hatschek-Verfahren plattenförmige Träger hergestellt werden.

Erfindungsgemäß einsetzbare Faserzement können dabei gemäß einer Ausgestaltung der Erfindung Bindemittel, Zusatzstoffe bzw. Füllstoffe, Fasern als Feststoffanteile aufweisen. Darüber hinaus können solche Faserzemente Wasser sowie Luft bzw. Lufteinschlüsse aufweisen.

Die in der Erfindung einsetzbaren Faserzemente können sowohl Fasern organischer Natur, wie beispielsweise Pflanzenfasern, Tierfasern wie beispielsweise Tierhaare, Zellulosefasern, Holzfasern, als auch anorganischer Natur, wie beispielsweise mineralischer Natur aufweisen.

Das Fasermaterial kann anorganische Fasern, wie beispielsweise Glasfasern, Mineralfasern Metallfasern wie beispielsweise Stahlfasern oder Keramikfasern aufweisen, oder auch synthetische Fasern auf Basis geeigneter Kunststoffe. Selbstverständlich kann das Fasermaterial dabei auch Mischungen solcher anorganischen oder synthetischen Fasern ausweisen.

Beispiele für pflanzliche Fasern sind Zellulosefasern, Lignosefasern sowie Fasern aus Stroh, Maisstroh, Bambus, Laub, Algenextrakten, Hanf, Baumwolle oder Ölpalmenfasern. Beispiele für tierische Faserwerkstoffe sind keratinbasierte Materialien wie z.B. Wolle oder Rosshaar.

Geeignete synthetische Fasern sind beispielsweise Polyvinylalkohol-Fasern, Polylactid-Fasern, Polyamid-Fasern, Polyimid-Fasern, Polyamidimid-Fasern, Polyphylensulfid-Fasern, Polyacrylnitril-Fasern, Polyester-Fasern, Polyethylenterephthalat-Fasern, Polyethylen-Fasern, Polypropylen-Fasern, Polyurethan-Fasern, Polyvinylchlorid-Fasern, Polytetrafluorethylen-Fasern, aromatische Polyamid-Fasern (Aramid) oder Kohlestofffasern.

Geeignete Zemente als Bindemittel in erfindungsgemäß als Trägerplatte verwendbaren Faserzementplatten sind beispielsweise Portland-Zement, Hochofen-Zement, Trass-Zement, Tonerde-Zement. Der Faserzement darüber hinaus weitere hydraulisch abbindende Bindemittel wie beispielsweise Gips, Bassanit, Puzzolan oder hydraulische Kalke aufweisen.

Als Zuschlagsstoffe kann der Faserzement beispielsweise mineralische Feststoffe wie Gesteinsmehl, oder organische Feststoffe wir beispielsweise Holzmehl aufweisen. Bevorzugt können diese eine Partikelgröße von weniger als 800 µm, bevorzugt von weniger als 600 µm, aufweisen. Dadurch kann der Feststoff sehr fein in dem Faserzement verteilt sein. Der Feststoff kann beispielsweise ein Holzwerkstoff, wie beispielsweise Holzmehl, oder ein anderes Material sein, wie etwa ein Bestandteil der Reispflanze, etwa der Reis-Spelz, der Reis-Stengel und die Reis-Schale, Zellulose oder ein mineralisches Material, wie etwa Steinmehl, Kreide oder andere anorganische mineralische Materialien.

Besonders bevorzugt kann es sein, wenn der Feststoff aus Talkum gebildet wird, beispielsweise daraus besteht. Unter Talkum wird dabei in an sich bekannter Weise ein Magnesiumsilikathydrat verstanden, welches beispielsweise die chemische Summenformel Mg₃[Si₄O₁₀(OH)₂] aufweisen kann.

Weitere geeignete Zuschlagstoffe sind beispielsweise Flugasche oder Basaltmehl.

Weiterhin kann der Faserzement als Zuschlagstoff beispielsweise Pigmente, wie beispielsweise Titandioxid, Ultramarin, Türkis, Zinnober, Eisenpigmente wie Eisenoxid oder Eisencyanblau, Ruß, Bismutpigmente wie z.B. Bismutvanadat, Cadmiumpigmente, Chromatpigmente Spinellpigmente, Hämtitpigmente, oder dergleichen aufweisen. Ebenso können organische Pigmente als Zuschlagstoff enthalten sein.

Vorteilhaft kann es sein, wenn die spezifische Oberflächendichte nach ISO 4352 (BET)) der Zuschlagstoffe in einem Bereich liegt von ≥ 4 m²/g bis ≤ 8 m²/g, etwa in einem Bereich von ≥ 5 m²/g bis ≤ 7 m²/g. Weiterhin kann es vorteilhaft sein, wenn die Zuschlagstoffe bei einer Schüttdichte nach DIN 53468 vorliegt in einem Bereich von ≥ 0,15 g/cm³ bis ≤ 0,45 g/cm³, etwa in einem Bereich von ≥ 0,25 g/cm³ bis ≤ 0,35 g/cm³. Bevorzugt kann es vorgesehen sein, dass die Zuschlagstoffe in Form von Partikeln vorliegt, die eine Partikelgröße D₅₀ aufweisen in einem Bereich von ≥ 3µm bis ≤ 6µm, vorzugsweise in einem Bereich von ≥ 4µm bis ≤ 5µm, beispielsweise von 4,5 µm, und/oder dass die Zuschlagstoffe in Form von Partikeln vorliegt, die eine Partikelgröße D₉₈ aufweisen in einem Bereich von ≥ 10µm bis ≤ 30µm, vorzugsweise in einem Bereich von ≥ 15 µm bis ≤ 20 µm, beispielsweise von 17 µm. Zur Bestimmung der Partikelgrößenverteilung kann grundsätzlich auf die allgemein bekannten Verfahren, wie beispielsweise die Laserdiffraktometrie, zurückgegriffen werden, mit welcher Partikelgrößen im Bereich von einigen Nanometern bis hin zu mehreren Millimetern bestimmt werden können. Mittels dieser Methode lassen sich auch D₅₀ bzw. D₉₈ Werte ermitteln, welche jeweils aussagen, dass 50% (D₅₀) bzw. 98% (D₉₈) der gemessenen Partikel kleiner sind als der jeweils angegebene Wert.

Es ist erfindungsgemäß, dass das Fasermaterial Fasern aufweist, die eine Länge in einem Bereich von ≥ 5µm bis ≤ 1500 µm, etwa in einem Bereich von ≥ 50 µm bis ≤ 1000 µm aufweisen. In überraschender Weise hat sich gezeigt, dass derartige Fasern eine hohe Stabilität ermöglichen können, wobei sich jedoch signifikante Vorteile bei der Herstellbarkeit ergeben können. So ist diese Ausgestaltung insbesondere in Abkehr von den Lösungen des Stands der Technik, bei welchen, insoweit Fasern in einem Material enthalten waren, eine vergleichsweise große Länge aufweisen, um einen gewünschten Effekt zu erzielen. Denn im Stand der Technik wurden meist Faserlängen im Millimeterbereich verwendet.

Weiterhin kann es dabei bevorzugt sein, dass das Fasermaterial Fasern aufweist, die einen Durchmesser beziehungsweise eine Stärke von ≥ 5µm bis ≤ 100µm, etwa in einem Bereich von ≥ 7µm bis ≤ 50µm aufweisen.

Bei der Verwendung von Metallfasern können diese auch einen deutlich größeren Durchmesser in einem Bereich zwischen ≥80µm und ≤ 1000µm aufweisen.

Gemäß einer Ausgestaltung der Erfindung kann das Verhältnis der Faserlänge zum Faserdurchmesser in einem Bereich zwischen 20:1 und 250:1, vorzugsweise 30:1 und 150:1 liegen.

Gemäß einer Ausgestaltung der Erfindung liegt der Anteil an Bindemittel im Faserzementmaterial in einem Bereich zwischen ≥ 25 Gew.-% und ≤ 85 Gew.-%, vorzugsweise zwischen ≥ 35 Gew.-% und ≤ 75 Gew.-%. Der Anteil der Zuschlagstoffe kann in einem Bereich zwischen ≥ 2 Gew.-% und ≤ 40 Gew.-%, vorzugsweise zwischen ≥ 5 Gew.-% und ≤ 25 Gew.-% liegen. Der Faseranteil kann in einem Bereich zwischen ≥ 2 Gew.-% und ≤ 20 Gew.-%, vorzugsweise zwischen ≥ 5 Gew.-% und ≤ 15 Gew.-% liegen. Weitere Bestandteile wie Wasser oder Luft können in einem die Gesamtzusammensetzung auf 100 Gew.-% ergänzenden Anteil enthalten sein.

Die Randbereiche eines erfindungsgemäßen Paneels können strukturiert beziehungsweise profiliert sein, um insbesondere lösbare Verbindungselemente vorzusehen. Diesbezüglich kann bei einer Profilierung im Sinne der Erfindung vorgesehen sein, dass mittels geeigneter materialabhebender Werkzeuge zumindest in einen Teil der Kanten des Dekorpaneels ein dekoratives und/oder funktionales Profil eingebracht wird. Dabei ist unter einem funktionalen Profil beispielsweise die Einbringung eines Nut- und/oder Federprofils in eine Kante zu verstehen, um Dekorpaneele über die eingebrachten Profilierungen miteinander verbindbar zu gestalten.

Ein erfindungsgemäß vorzusehender Dekoruntergrund oder Primer ist zumindest auf einem Teilbereich des Trägers aufgebracht. Beispielsweise kann zunächst ein Primer insbesondere für Druckverfahren als Dekoruntergrund aufgebracht sein. Dieser Primer kann beispielsweise in einer Dicke von ≥ 10µm bis ≤ 60 µm aufgebracht sein. Dabei kann als Primer eine flüssige strahlungshärtende Mischung auf Basis eines Urethans oder eines Urethanacrylats, gegebenenfalls mit einem oder mehreren von einem Photoinitiator, einem Reaktivverdünner, einem UV-Stabilisator, einem Rheologiemittel wie einem Verdicker, Radikalfänger, Verlaufshilfsmittel, Entschäumer oder Konservierungsmittel, Pigment und/oder einem Farbstoff eingesetzt werden.

Zusätzlich zu dem Primer kann ein Haftgrund, insbesondere ein gefärbter Haftgrund, aufgebracht sein. Beispielsweise kann der Haftgrund Polyurethan aufweisen, etwa als Polyurethanlack ausgestaltet sein, und etwa mit weißen Pigmenten versehen sein.

Das Dekor beziehungsweise die Dekorschicht können durch einen Druckvorgang erzeugt werden, wobei sowohl Flexo-Druck, Offset-Druck oder Siebdruckverfahren, als auch insbesondere Digitaldrucktechniken, wie beispielsweise Inkjet-Verfahren oder Laserdruck-Verfahren geeignet sind. Die Dekorschicht kann aus einer insbesondere strahlungshärtbaren Farbe und/oder Tinte ausgebildet werden. Beispielsweise kann eine UV-härtbare Farbe oder Tinte verwendet werden.

Es kann ferner gegebenenfalls zunächst etwa vor dem Bedrucken ein Vorbehandeln des Trägers zur elektrostatischen Entladung und gegebenenfalls anschließender elektrostatischer Beladung erfolgen. Dies kann insbesondere dazu dienen, das Auftreten von Unschärfen im Laufe der Dekoraufbringung zu vermeiden.

Der auf die Dekorschicht zu Ausbildung einer Schicht eines strahlungshärtbaren Lackes aufgebrachte Lack weist bevorzugt ein Acrylat, ein Diacraylat, ein Methacrylat, ein Urethan, Urethanacrylat oder Mischungen dieser auf. Darüber hinaus kann ein solcher Lack weitere Bestandteile wie insbesondere einen Photoinitiator, einen Reaktivverdünner, einen UV-Stabilisator, einen Rheologiemittel wie einen Verdicker, einen Radikalfänger, ein Verlaufshilfsmittel, einen Entschäumer oder ein Konservierungsmittel, ein Pigment und/oder einen Farbstoff. Selbstverständlich können auch mehrere und/oder unterschiedliche der zuvor genannten Bestandteile in einem solchen Lack enthalten sein.

Gemäß einer Ausgestaltung der Erfindung kann es beispielsweise vorgesehen sein, dass der Lack eine Diarcrylat in einer Konzentration zwischen ≥ 20 Gew.-% und ≤ 60 Gew.-% und ein Methacrylat in einer Konzentration zwischen ≥ 1 Gew.-% und ≤ 20 Gew.-% aufweist.

Als Photoinitiator für im Rahmen dieser Erfindung eingesetzte strahlungshärtbare Lacke oder Zusammensetzungen können beispielsweise Verbindungen der Gruppe ausgewählt aus Benzophenone wie beispielsweise Benzophenone, 4,4-Bis(diethylamino)benzophenon, und 3,3',4,4'-Tetramethoxybenzophenon, Anthrachinone wie beispielsweise t-Butylanthrachinone und 2-Ethylanthrachinone, Thioxanthone wie beispielsweise 2,4-Diethylthioxanthon, Isopropylthioxanthon und 2,4-Dichlorothioxanthon; Acetophenone wie beispielsweise Diethoxyacetophenon, 2,2-Dimethoxyphenylacetophenon, 2-Hydroxy-2-methyl-1-phenylpropan-1-on, Benzyldimethylketal, 1-Hydroxycyclohexylphenylketon, 2-Methyl-2-morpholino(4-methylthiophenyl)propan-1-on, 2-Methyl-1-(4-methylthiophenyl)-2-morpholino-propan-1-on, 2-Benzyl-2-dimethylamino-1-(4-morpholinophenyl)-butanon und Trichloroacetophenon; Benzoinether wie beispielsweise Benzoinmethylether, Benzoinethylether, Benzoinisopropylether und Benzoinisobutylether; Acylphosphinoxide wie beispielsweise 2,4,6-Trimethylbenzoyldiphenylphosphinoxide, Bis(2,6-dimethoxybenzoyl)-2,4,4-trimethylpentylphosphinoxide und Bis(2,4,6-trimethylbenzoyl)-phenylphosphinoxid, Methylbenzoylformat, 1,7-Bisacridinylheptan, 9-Phenylacridin und Azoverbindungen wie beispielsweise Azobisisobutyronitril, Diazoniumverbindungen, und Tetrazenverbindungen. Ein Photoinitiator kann dabei beispielsweise in ein einer Konzentration zwischen 0,5 bis 5 Gew.-% in der Lackzusammensetzung enthalten sein.

Eine nicht-erfindungsgemäße Alternative zum oben erwähnten Lack ist ein Hotmelt. Ein Hotmelt ist ein vorzugsweise lösungsmittelfreier und bei Raumtemperatur mehr oder weniger fester Heißklebstoff, der im heißen Zustand auf die Dekorschicht aufgetragen wird und beim Abkühlen eine feste Verbindung der Kunststofffolie zu dieser herstellt.

Ein geeigneter Hotmelt weist vorzugsweise ein Basispolymer sowie ggf. einen Harzbestandteil, Stabilisatoren, Wachse und/oder Nukleierungsmittel auf. Geeignete Basispolymere können dabei bevorzugt ausgewählt sein aus der Gruppe bestehend aus Polyamid, Polyethylen, amorphe Polyalphaolefine, Ethylenvinylacetat-Copolymere, Polyester-Elastomere, Polyurethan-Elastomere, Copolyamid-Elastomere und Vinylpyrrolidon /Vinylacetat-Copolymere.

Geeignete Harzbestandteile können bevorzugt ausgewählt sein aus der Gruppe bestehend Kolophonium, Terpenharze und Kohlenwasserstoffharze.

Geeignete Stabilisatoren können bevorzugt ausgewählt sein aus der Gruppe bestehend aus Antioxidantien wie Phenole oder Peroxidzersetzer, Metalldesaktivatoren und Lichtschutzmitteln.

Als Wachse kann ein Hotmelt vorzugsweise Bienenwachs, Fruchtwachs oder Carnauberwachs, sowie synthetische oder teilsysthetische Wachse aufweisen.

Gemäß einer Ausgestaltung der Erfindung kann die strukturierte Kunststofffolie aus einem Kunststoff besteht, welcher ausgewählt ist aus der Gruppe bestehend aus Polypropylen (PP), Polyethylen (PE), Polyethylenterephthalat (PET), Polycarbonat (PC), Polybutalterephthalat (PBT), einem Polytrimethylenterephthalat (PTT), einem Copolymer oder einen Blockcopolymer dieser.

Bevorzugt weist die Kunststofffolie dabei eine Dicke zwischen >60µm und ≤500µm, vorzugsweise zwischen ≥80µm und ≤350µm, insbesondere zwischen ≥100µm und ≤300µm, wie beispielsweise 120 µm, 140µm, 160µm, 180µm, 200µm, 220µm, 240µm, 260µm oder 280µm auf. Eine solche Dicke hat sich zum einen hinsichtlich der Handhabebarkeit im Herstellungsprozess des Dekorpaneels als auch des mit Ihr erzielbaren haptischen Eindrucks als besonderes geeignet erwiesen.

Gemäß einer weiter bevorzugten Ausgestaltung weist die strukturierte Kunststofffolie eine Prägetiefe zwischen 60µm und 180µm auf. Insbesondere ist es dabei vorteilhaft, wenn die Prägetiefe geringer ist als die Schichtdicke der Kunststofffolie. Dabei ist als Schichtdicke die Stärke der Folie in ungeprägten Bereichen zu verstehen.

Gemäß einer weiter bevorzugten Ausgestaltung der Erfindung beträgt die Prägetiefe zwischen 25% und 65% der Schichtdicke der Kunststofffolie.

Gemäß einer Ausgestaltung der Erfindung weist der zur Ausbildung einer Decklackschicht auf die strukturierte Kunststoffschicht aufgebrachte Lack ein Acrylat, ein Diacraylat, ein Methacrylat, ein Urethan, Urethanacrylat oder Mischungen dieser auf. Darüber hinaus kann ein solcher Lack weitere Bestandteile wie insbesondere einen Photoinitiator, einen Reaktivverdünner, einen UV-Stabilisator, einen Rheologiemittel wie einen Verdicker, einen Radikalfänger, ein Verlaufshilfsmittel, einen Entschäumer oder ein Konservierungsmittel, ein Pigment und/oder einen Farbstoff. Selbstverständlich können auch mehrere und/oder unterschiedliche der zuvor genannten Bestandteile in einem solchen Lack enthalten sein.

Gemäß einer weiteren Ausgestaltung der Erfindung kann es vorgesehen sein, dass die Decklackschicht aus einer Mehrzahl von Lackschichten ausgebildet ist oder durch einen Mehrfachauftrag von Lackzusammensetzungen gleicher oder unterschiedlicher Zusammensetzung gebildet wird. Dabei kann es auch vorgesehen sein, dass wenigstens eine Lackschicht oder ein Lackauftrag eine Lackzusammensetzung aufweist, welche Hartstoff wie beispielsweise Titannitrid, Titancarbid, Siliciumnitrid, Siliciumcarbid, Borcarbid, Wolframcarbid, Tantalcarbid, Aluminiumoxid (Korund), Zirconiumoxid oder Mischungen dieser aufweist, um die Verschleißfestigkeit der gebildeten Schicht zu erhöhen. Ebenso kann es vorgesehen sein, dass wenigstens eine Lackschicht oder ein Lackauftrag eine Lackzusammensetzung aufweist, welche einen Feststoff beispielweise Glaskugel, Glasellipsen oder aber auch Zellulosefasern aufweist, um die Verschleißfestigkeit der gebildeten Schicht zu erhöhen. Dabei kann es auch vorgesehen sein, dass eine Lackschicht oder ein Lackauftrag eine Lackzusammensetzung aufweist, welche sowohl Hartstoffe als auch Feststoff der zuvor genannten Art aufweist.

Hinsichtlich des Verfahrens wird die Aufgabe der vorliegenden Erfindung durch ein Verfahren zur Herstellung eines dekorierten Wand- oder Bodenpaneels auf Basis einer Faserzementplatte gelöst, aufweisend die Verfahrensschritte:
a) Bereitstellen eines Trägers aus einem Faserzementmaterial;
b) Aufbringen einer Primer-Schicht auf eine Oberfläche des bereitgestellten Trägers;
c) Aufbringen einer Dekorschicht auf die in Schritt b) aufgebrachte Primer-Schicht mittels eines Direktdruckverfahrens;
d) Aufbringen einer Schicht eines strahlungshärtbaren Lackes auf die in Schritt
c) aufgebrachte Dekorschicht; anschließend entweder
e1) Aufbringen einer nicht oder nicht strukturierten Kunststofffolie auf die noch nicht oder noch nicht vollständig ausgehärtete Schicht des in Schritt d) aufgebrachten strahlungshärtbaren Lackes;
e2) Aushärten der in Schritt d) aufgebrachten Schicht eines strahlungshärtbaren Lackes mittels Einwirkung geeigneter elektromagnetischer Strahlung, wobei die in Schritt e1) aufgebrachte Kunststofffolie an den übrigen Schichtaufbau angebunden wird;
e3) Strukturieren der in Schritt e1) aufgebrachten nicht strukturierten Kunststofffolie durch eine Prägemittel zur Ausbildung einer strukturierten Kunststofffolie; oder
e1') Aufbringen einer strukturierten Kunststofffolie auf die noch nicht oder noch nicht vollständig ausgehärtete Schicht des in Schritt d) aufgebrachten strahlungshärtbaren Lackes
e2') Aushärten der Schicht des in Schritt d) aufgebrachten strahlungshärtbaren Lackes mittels Einwirkung geeigneter elektromagnetischer Strahlung, wobei die in Schritt e1') aufgebrachte Kunststofffolie an den übrigen Schichtaufbau angebunden wird;
   anschließend
f) Aufbringen wenigstens einer Deckschicht aus einem strahlungshärtbaren Lack auf die strukturierte Kunststofffolie; und
g) Aushärten der in Schritt f) aufgebrachten wenigstens einen Deckschicht.

Im Sinne der vorliegenden Erfindung ist dabei unter einer nicht strukturierten Kunststofffolie auch eine nicht vollständig oder nur teilweise strukturierte Kunststofffolie zu verstehen, welche im Zuge des weiteren Verfahrens eine ergänzende Strukturierung erhält.

Im Sinne der vorliegenden Erfindung ist dabei eine nicht vollständig ausgehärtete Schicht des in Schritt d) aufgebrachten strahlungshärtbaren Lackes eines solche, die zwar bereits durch geeignete Maßnahmen, wie beispielsweise Einwirkung von elektromagnetischer Strahlung geringer Intensität und/oder kurzer Dauer, angeliert wurde, jedoch noch nicht vollständig ausgehärtet ist und insoweit noch radikalisch polymerisierbare Bestandteile enthält.

Vor Aufbringen der Primer-Schicht auf eine Oberfläche des bereitgestellten Trägers kann es vorgesehen sein, dass die entsprechende Oberfläche des Trägers mittels einer Korona- und/oder Plasma-Behandlung vorbehandelt wird. Hierdurch kann eine verbesserte Haftung der Primer-Schicht an der Oberfläche erreicht werden.

Das Aufbringen der Primer-Schicht kann beispielsweise mittels Walzen, wie Gummiwalzen, mittels Rakeln, mittels Gießvorrichtungen, mittels Sprühvorrichtungen oder einer Kombination der zuvor genannten Einrichtungen erfolgen.

Zur Aufbringung der Dekorschicht auf die in Schritt b) aufgebrachte Primer-Schicht mittels eines Direktdruckverfahrens sind insbesondere Flexo-Druck, Offset-Druck oder Siebdruckverfahren, als auch insbesondere Digitaldrucktechniken, wie beispielsweise Inkjet-Verfahren oder Laserdruck-Verfahren geeignet.

Im Anschluss an die Aufbringung der Dekorschicht erfolgt ein Auftrag einer Schicht eines strahlungshärtbaren Lackes. Das Aufbringen dieser Lackschicht kann beispielsweise mittels Walzen, wie Gummiwalzen, mittels Rakeln, mittels Gießvorrichtungen, mittels Sprühvorrichtungen oder einer Kombination der zuvor genannten Einrichtungen erfolgen.

Gegebenenfalls kann es erfindungsgemäß vorgesehen sein, dass die aufgetragene Lackschicht durch Einwirkung elektromagnetischer Strahlung, wie beispielsweise UV-Strahlung oder Mikrowellenstrahlung, teilgehärtet wird, wobei diese Teilhärtung mit der Maßgabe erfolgt, dass die aufgetragene Schicht noch eine Restfließfähigkeit aufweist und nicht vollständig ausgehärtet wird.

Sollte statt der oben erwähnten Lackschicht eine Hotmeltschicht aufgetragen werden, was jedoch nicht Teil der Erfindung ist, so kann es vorgesehen sein, dass die aufgetragene Hotmeltschicht durch Abkühlung teilgehärtet wird, wobei diese Teilhärtung mit der Maßgabe erfolgt, dass die aufgetragene Schicht noch eine Restfließfähigkeit aufweist und nicht vollständig ausgehärtet wird.

Im Anschluss an den Lackauftrag bzw. Hotmeltauftrag wird auf das noch fließfähige Lackbett oder Hotmeltbett eine strukturierte oder nicht strukturierte Kunststofffolie aufgebracht. Dies kann beispielsweise mittels eines Kalanders in einem Kalandrierschritt erfolgen. Dabei kann die Kunststofffolie in das Lackbett zumindest teilweise eingedrückt werden. Vorzugsweise erfolgt dabei die Aufbringung der Kunststofffolie unter Vermeidung des Einschlusses von Luftblasen zwischen der Lackschicht und der Kunststofffolie.

Nach dem Aufbringen der Kunststofffolie auf die Lackschicht oder die Hotmeltschicht wird diese durch Einwirkung geeigneter elektromagnetischer Strahlung ausgehärtet, wodurch die darauf aufgebrachte Folie fest an den bis dahin erfolgten Schichtaufbau angebunden wird.

Gemäß einer Ausgestaltung des Verfahrens werden als Prägemittel in Schritt e3) eine Prägewalze, ein Prägeblech oder ein Prägestempel mit einer Prägetiefe eingesetzte, die geringer ist als die Dicke der in Schritt e1) aufgebrachten Kunststofffolie. Insbesondere kann es dabei vorgesehen sein, dass das Prägemittel eine Prägetiefe zwischen 25% und 65% der Schichtdicke der Kunststofffolie aufweist.

Bevorzugt erfolgt die Prägung unter Wärmeeinwirkung. Dazu kann es vorgesehen sein, dass die Kunststofffolie mittels geeigneter Einrichtungen, wie beispielsweise IR-Strahler, zumindest oberflächlich erwärmt wird. Auch kann es vorgesehen sein, dass das Prägemittel mittels geeigneter Einrichtungen erwärmt wird. Letztendlich kann auch eine Kombination dieser Möglichkeiten vorgesehen sein, bei welcher sowohl die Kunststofffolie mittels z.B. IR-Strahlern vorgewärmt wird und dann mit entsprechend erwärmten Prägemitteln eine Struktur in die Kunststofffolie eingeprägt wird.

Vorzugsweise wird die Wärmeeinwirkung derart gesteuert, dass die Kunststofffolie auf eine Temperatur im Bereich zwischen 30% und 80%, vorzugsweise 40% und 70% der Schmelztemperatur des Kunststofffolienmaterials erwärmt wird. Es hat sich gezeigt, dass bei einer solchen Erwärmungsrate ein gutes Prägeergebnis erreicht werden kann, ohne die Folie in Ihrer Haltbarkeit wesentlich negativ zu beeinflussen.

So kann es beispielsweise vorgesehen sein, dass bei Verwendung einer PET-Folie die Wärmeeinwirkung derart gesteuert wird, dass eine Oberflächentemperatur der Folie von 130°C nicht überschritten wird.

Gemäß einer Ausgestaltung der Erfindung kann es vorgesehen sein, dass vor der Prägung der aufgebrachten Kunststofffolie auf diese ein Prägelack aufgebracht wird, welcher eine hinreichende Flexibilität aufweist, um in einem anschließenden Prägeschritt mitgeprägt zu werden. Bei einem solchen Prägelack handelt es sich bevorzugt ebenfalls um eine strahlungshärtbare Lackzusammensetzung.

In einer Ausgestaltung der Erfindung ist es vorgesehen, dass die durch die Strukturierung der Kunststofffolie in Übereinstimmung mit dem Dekorbild erfolgt, um die realistische Anmutung des Dekors haptisch zu unterstützen. Dazu kann es vorgesehen sein, dass das Dekorbild sogenannte Passer-Markierungen aufweist, anhand welcher die Prägemittel oder die bereits strukturierte Kunststofffolie gegenüber dem Dekor ausgerichtet werden, um eine zum Dekor synchrone Strukturierung sicherzustellen.

Gemäß einer weiteren Ausgestaltung der Erfindung kann es vorgesehen sein, dass die dem Träger zugewandte Seite der Kunststofffolie vor dem Aufbringen auf die noch nicht oder noch nicht vollständig ausgehärtete Schicht des in Schritt d) aufgebrachten strahlungshärtbaren Lackes einer Korona-Behandlung und/oder Plasma-Behandlung unterzogen. Hierdurch kann eine Verbesserung der Haftung der Folie auf der strahlungshärtbaren Lackschicht erreicht werden.

Alternativ oder ergänzend zu der zuvor beschriebenen Korona- und/oder Plasma-Behandlung kann die der Trägerplatte zugewandte Seite der Kunststofffolie ein Haftprimer aufgetragen wird.

Gemäß einer Ausgestaltung der Erfindung kann es dazu vorgesehen sein, dass als Haftprimer eine für das Kunststofffolienmaterial geeignetes Quellmittel und/oder Lösungsmittel aufweisende Zusammensetzung aufgetragen wird. Eine solche Zusammensetzung kann dazu beispielsweise Aceton, Methylethylketon, Ethylacetat, Isobutylacetat, Tetrahydrofuran, Dimethylsulfoxid, Sulfolan, Acetonitril, Nitromethan, γ-Butyrolacton oder Mischungen dieser aufweisen.

Gemäß einer bevorzugten Ausgestaltung kann eine solche Zusammensetzung beispielsweise zwischen ≥ 5 Gew.-% und ≤ 35 Gew.-% Isobutylacetat und zwischen ≥ 2 Gew.-% und ≤ 65 Gew.-% Methylethylketon aufweisen.

Erfindungsgemäß kann es vorgesehen sein, dass das Verfahren nach Verfahrensschritten e2) bzw. e2') oder e3) und somit vor dem Auftrag der Deckschicht in Schritt (f) unterbrochen wird. Hierbei wird ein lagerfähiges Zwischenprodukt oder Halbzeug erhalten, welches zeitlich und/oder räumlich vom vorherigen Herstellungsprozess durch Auftrag der Deckschicht, ggf. unter vorheriger Strukturierung, weiterverarbeitet werden kann. Ausdrücklich umfasst die Erfindung somit auch ein Verfahren zur Herstellung eines solchen Zwischenproduktes, welches dann aus einem Träger, einer Primer-Schicht, einer Dekorschicht, einer auf der Dekorschicht angeordneten Schicht eines strahlungshärtbaren Lackes oder eines Hotmelts und einer Kunststofffolie besteht.

In einer nicht-erfindungsgemäßen Ausgestaltung kann es vorgesehen sein, dass auf eine Strukturierung der Kunststofffolie weitestgehend verzichtet wird und auf die Kunststofffolie lediglich eine oder mehrere Decklackschichten aufgebracht werden. Die Oberfläche des sich daraus ergebenden Dekorpaneels wäre somit im Wesentlichen glatt und unstrukturiert.

Auf den nach dem Verfahrensschritt e2') oder e3) Schichtverbund wird erfindungsgemäß eine Decklackschicht aus einem strahlungshärtbaren Lack aufgetragen.

Gemäß einer weiteren Ausgestaltung der Erfindung kann es vorgesehen sein, dass die Decklackschicht durch einen Mehrfachauftrag von Lackzusammensetzungen gleicher oder unterschiedlicher Zusammensetzung gebildet wird und dem entsprechend der Verfahrensschritt f) wiederholt ausgeführt wird. Dabei kann es auch vorgesehen sein, dass wenigstens eine Lackschicht oder ein Lackauftrag eine Lackzusammensetzung aufweist, welche Hartstoffe wie beispielsweise Titannitrid, Titancarbid, Siliciumnitrid, Siliciumcarbid, Borcarbid, Wolframcarbid, Tantalcarbid, Aluminiumoxid (Korund), Zirconiumoxid oder Mischungen dieser aufweist, um die Verschleißfestigkeit der gebildeten Schicht zu erhöhen. Ebenso kann es vorgesehen sein, dass wenigstens eine Lackschicht oder ein Lackauftrag eine Lackzusammensetzung aufweist, welche einen Feststoff beispielweise Glaskugel, Glasellipsen oder aber auch Zellulosefasern aufweist, um die Verschleißfestigkeit der gebildeten Schicht zu erhöhen. Dabei kann es auch vorgesehen sein, dass eine Lackschicht oder ein Lackauftrag eine Lackzusammensetzung aufweist, welche sowohl Hartstoffe als auch Feststoff der zuvor genannten Art aufweist.

Abschließend erfolgt in Schritt g) die Aushärtung der in Schritt f) aufgetragenen Decklackschicht. Bei einer Wiederholung des Schrittes f) in der zuvor beschriebenen Weise kann es vorgesehen sein, dass Schritt g) ebenfalls wiederholt wird, gegebenenfalls mit der Maßgabe, dass zwischen der Wiederholung des Schrittes f) keine vollständige Aushärtung der aufgetragenen Lackzusammensetzung erfolgt, sondern nur eine Teilhärtung oder Angelierung und eine abschließende Härtung durch eine entsprechend lange und/oder intensive Einwirkung geeigneter elektromagnetischer Strahlung, wie beispielsweise UV-Strahlung oder Mikrowellenstrahlung, erfolgt.

Die Erfindung ist nachfolgend anhand der Figuren sowie eines Ausführungsbeispiels weiter erläutert.
Fig. 1 zeigt schematisch den Aufbau eines erfindungsgemäßen dekorierten und oberflächenstrukturierten Wand- oder Bodenpaneels;
Fig. 2 zeigt schematisch ein Zwischenprodukt, wie es im Rahmen des erfindungsgemäßen Verfahrens erhalten werden kann;
Fig. 3 zeigt schematisch ein weiteres Zwischenprodukt, wie es im Rahmen des erfindungsgemäßen Verfahrens erhalten werden kann;
Fig. 4 zeigt schematisch eines dekoriertes Wand- oder Bodenpaneels mit einer unstrukturierten Kunststofffolie.

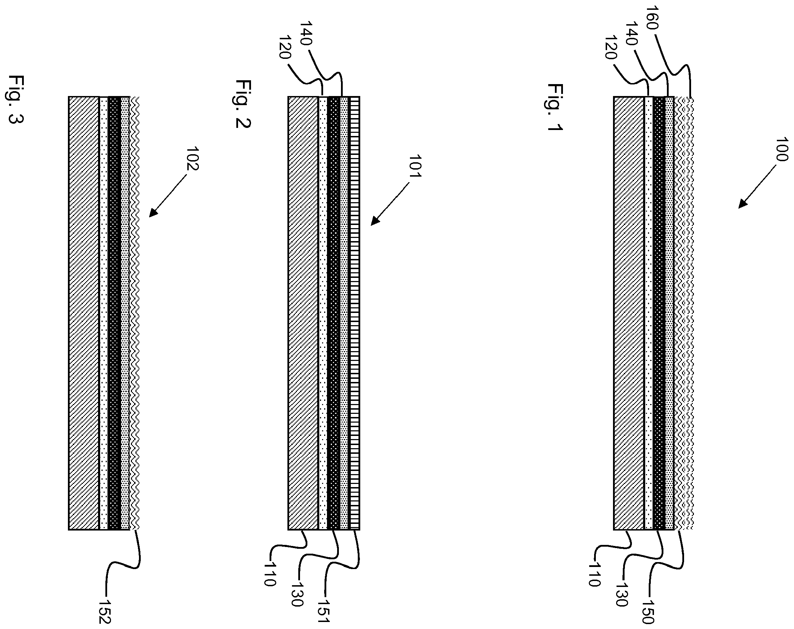

Fig. 1 zeigt schematisch den Aufbau eines erfindungsgemäßen dekorierten und oberflächenstrukturierten Wand- und oder Bodenpaneels 100. Das Paneels weist dabei einen vorzugsweise aus einem Faserzementmaterial gefertigten Träger 110 auf. Auf einer Oberfläche des Trägers 110 ist eine Primer-Schicht 120 angeordnet, welche auch als Druckuntergrund für die darüber angeordnete Dekorschicht 130 dienen kann. Die Dekorschicht 130 kann mittels eines Direktdruckverfahrens wie beispielsweise Flexo-Druck, Offset-Druck oder Siebdruckverfahren, als auch insbesondere mittels Digitaldrucktechniken, wie beispielsweise Inkjet-Verfahren oder Laserdruck-Verfahren auf die Primer-Schicht 120 aufgebracht werden. Auf der Dekorschicht 130 wiederum ist eine Schicht 140 eines strahlungshärtbaren Lackes angeordnet, mittels welcher die auf der Schicht 140 angeordnete strukturierte Kunststofffolie 150 an den Schichtverbund angebunden ist. Oberhalb der strukturierten Kunststofffolie 150 ist eine Decklackschicht 160 angeordnet. Dabei kann es vorgesehen sein, dass die Decklackschicht 160 zur Verbesserung der Verschleißfestigkeit Hartstoffe und/oder Feststoffe und/oder Fasern aufweist. In jedem Fall ist die Decklackschicht derart ausgestaltet, dass sie die durch die strukturierte Kunststofffolie hervorgerufene Oberflächenstruktur nicht oder nicht vollständig einebnet, so dass diese zumindest teilweise haptisch an der Oberfläche des Wand- oder Bodenpaneels wahrnehmbar ist.

Fig. 2 zeigt schematisch ein Zwischenprodukt 101, wie es im Rahmen des erfindungsgemäßen Verfahrens erhalten werden kann. Dabei entsprechen die Schichten 110, 120, 130 und 140 den aus der Fig. 1 bekannten Schichten. Anstatt einer bereits vorstrukturierten Kunststofffolie weist das in Fig. 2 gezeigte Zwischenprodukt eine nicht oder nicht abschließend strukturierte Kunststofffolie 151 auf. In einem gegebenenfalls zeitlich und/oder räumlich getrennten Weiterbearbeitungsschritt kann die durch die Kunststofffolie gebildete Oberfläche des Zwischenproduktes 101 mittels geeigneter Prägemittel, insbesondere unter Einwirkung von Wärme strukturiert werden. In einem wiederum gegebenenfalls zeitlich und/oder räumlich getrennten Weiterbearbeitungsschritt kann dann der Auftrag einer Decklackschicht erfolgen.

Fig. 3 zeigt schematisch ein Zwischenprodukt 102, wie es im Rahmen des erfindungsgemäßen Verfahrens erhalten werden kann. Dabei entsprechen die Schichten 110, 120, 130 und 140 den aus der Fig. 1 bekannten Schichten. Die Schicht 152 stellt in der gezeigten Ausführungsform eine strukturierte Kunststofffolie dar. Dabei kann es sich entweder um eine bereits vorstrukturierte Kunststofffolie handeln, oder um eine nicht strukturierte Kunststofffolie wie sie in Fig. 2 dargestellt ist, welche in einem in einem gegebenenfalls zeitlich und/oder räumlich getrennten Weiterbearbeitungsschritt mittels geeigneter Prägemittel, insbesondere unter Einwirkung von Wärme strukturiert wurde. In einem wiederum gegebenenfalls zeitlich und/oder räumlich getrennten Weiterbearbeitungsschritt kann dann der Auftrag einer Decklackschicht erfolgen.

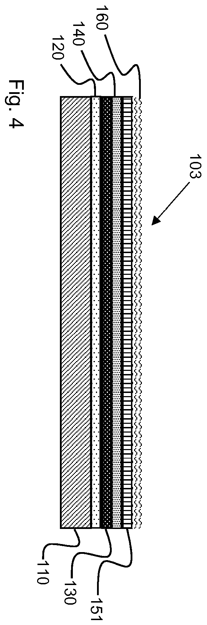

Fig. 4 zeigt schematisch ein dekoriertes Wand- oder Bodenpaneel 103, wie es im Rahmen des erfindungsgemäßen Verfahrens erhalten werden kann. Dabei entsprechen die Schichten 110, 120, 130 und 140 den aus der Fig. 1 bekannten Schichten. In einem gegebenenfalls zeitlich und/oder räumlich getrennten Weiterbearbeitungsschritt kann dann der Auftrag einer Decklackschicht 160 erfolgen.

### Bezugszeichen:

- 100: Wand- oder Bodenpaneel
- 101: Zwischenprodukt
- 102: Zwischenprodukt
- 103: Wand- oder Bodenpaneel
- 110: Träger
- 120: Primer-Schicht
- 130: Dekorschicht
- 140: strahlungshärtbare Lackschicht
- 150: strukturierte Kunststofffolie
- 151: nicht strukturierte Kunststofffolie
- 152: strukturierte Kunststofffolie
- 160: Decklackschicht

## Patentansprüche

1. Dekoriertes Wand- oder Bodenpaneel (100) aufweisend
- einen Träger (110),
- eine auf einer Oberfläche dem Träger (110) angeordnete Primer-Schicht (120),
- eine auf der Primer-Schicht (120) angeordnete Dekorschicht (130),
- eine auf der Dekorschicht (130) angeordnete Schicht (140) eines strahlungshärtbaren Lackes,
- eine auf der Schicht (140) eines strahlungshärtbaren Lackes angeordnete strukturierte Kunststofffolie (150, 152), **gekennzeichnet durch**
- eine auf der strukturierten Kunststofffolie angeordnete Decklackschicht (160), und **dadurch**, dass der Träger (110) ein Faserzementmaterial aufweist, welches anorganische, organische, metallische, synthetische Fasern oder Mischungen dieser aufweist und die Fasern eine Länge in einem Bereich von ≥ 5µm bis ≤ 1500µm aufweisen.

2. Dekoriertes Wand- oder Bodenpaneel gemäß einem der vorhergehenden Ansprüche, wobei die Primer-Schicht (120) ein strahlungshärtetes Urethan und/oder Urethanacrylat aufweist.

3. Dekoriertes Wand- oder Bodenpaneel gemäß einem der vorhergehenden Ansprüche, wobei die Dekorschicht (130) wenigstens eine strahlungsgehärtete Tintenzusammensetzung aufweist.

4. Dekoriertes Wand- oder Bodenpaneel gemäß einem der vorhergehenden Ansprüche, wobei der auf die Dekorschicht (130) zur Ausbildung einer Schicht (140) eines strahlungshärtbaren Lackes aufgebrachte Lack ein Acrylat, ein Diacraylat, ein Methacrylat, ein Urethan, Urethanacrylat oder Mischungen dieser aufweist.

5. Dekoriertes Wand- oder Bodenpaneel gemäß einem der vorhergehenden Ansprüche, wobei die strukturierte Kunststofffolie (150) aus einem Kunststoff besteht, welcher ausgewählt ist aus der Gruppe bestehend aus Polypropylen (PP), Polyethylen (PE), Polyethylenterephthalat (PET), Polycarbonat (PC), Polybutalterephthalat (PBT), einem Polytrimethylenterephthalat (PTT), einem Copolymer oder einen Blockcopolymer dieser.

6. Dekoriertes Wand- oder Bodenpaneel gemäß einem der vorhergehenden Ansprüche, wobei die strukturierte Kunststofffolie eine Dicke zwischen > 60 µm und ≤ 500 µm, vorzugsweise zwischen ≥ 80 µm und ≤ 350 µm, insbesondere zwischen ≥ 100 µm und ≤ 300 µm aufweist.

7. Dekoriertes Wand- oder Bodenpaneel gemäß einem der vorhergehenden Ansprüche, wobei die strukturierte Kunststofffolie eine Prägetiefe zwischen 60 µm und 180 µm aufweist.

8. Dekoriertes Wand- oder Bodenpaneel gemäß einem der vorhergehenden Ansprüche, wobei der zur Ausbildung einer Decklackschicht (160) auf die strukturierte Kunststoffschicht aufgebrachte Lack ein Acrylat, ein Diacraylat, ein Methacrylat, ein Urethan, Urethanacrylat oder Mischungen dieser aufweist.

9. Dekoriertes Wand- oder Bodenpaneel gemäß einem der vorhergehenden Ansprüche, wobei das Paneel an wenigstens zwei gegenüberliegenden Kanten komplementäre Verriegelungsmittel aufweist, mittels welcher sich Paneele zu einem verbundenen Wand- oder Bodenbelag zusammenfügen lassen.

10. Verfahren zur Herstellung eines dekorierten Wand- oder Bodenpaneels (100), aufweisend die Verfahrensschritte:
a) Bereitstellen eines Trägers (110) aus einem Faserzementmaterial, wobei das Faserzementmaterial anorganische, organische, metallische, synthetische Fasern oder Mischungen dieser aufweist und die Fasern eine Länge in einem Bereich von ≥ 5µm bis ≤ 1500µm aufweisen;
b) Aufbringen einer Primer-Schicht (120) auf eine Oberfläche des bereitgestellten Trägers;
c) Aufbringen einer Dekorschicht (130) auf die in Schritt b) aufgebrachte Primer-Schicht mittels eines Direktdruckverfahrens;
d) Aufbringen einer Schicht (140) eines strahlungshärtbaren Lackes auf die in Schritt
c) aufgebrachte Dekorschicht;
anschließend entweder
e1) Aufbringen einer nicht strukturierten Kunststofffolie (151) auf die noch nicht oder noch nicht vollständig ausgehärtete Schicht (140) des in Schritt d) aufgebrachten strahlungshärtbaren Lackes;
e2) Aushärten der in Schritt d) aufgebrachten Schicht (140) eines strahlungshärtbaren Lackes mittels Einwirkung geeigneter elektromagnetischer Strahlung, wobei die in Schritt e1) aufgebrachte Kunststofffolie (151) an den übrigen Schichtaufbau angebunden wird;
e3) Strukturieren der in Schritt e1) aufgebrachten nicht strukturierten Kunststofffolie (151) durch eine Prägemittel zur Ausbildung einer strukturierten Kunststofffolie (152);
oder
e1') Aufbringen einer strukturierten Kunststofffolie (150) auf die noch nicht oder noch nicht vollständig ausgehärtete Schicht (140) des in Schritt d) aufgebrachten strahlungshärtbaren Lackes;
e2') Aushärten der Schicht (140) des in Schritt d) aufgebrachten strahlungshärtbaren Lackes mittels Einwirkung geeigneter elektromagnetischer Strahlung, wobei die in Schritt e1') aufgebrachte Kunststofffolie (150) an den übrigen Schichtaufbau angebunden wird;
anschließend
f) Aufbringen wenigstens einer Deckschicht (160) aus einem strahlungshärtbaren Lack auf die strukturierte Kunststofffolie; und
g) Aushärten der in Schritt f) aufgebrachten wenigstens einen Deckschicht (160).

11. Verfahren gemäß Anspruch 10, wobei als Prägemittel in Schritt e3) eine Prägewalze, ein Prägeblech oder ein Prägestempel mit einer Prägetiefe eingesetzt wird, die geringer ist als die Dicke der in Schritt e1) aufgebrachten Kunststofffolie (151).

12. Verfahren gemäß einem der Ansprüche 10 oder 11, wobei Schritt e3) unter Wärmeeinwirkung erfolgt und die Wärmeeinwirkung derart gesteuert wird, dass die Kunststofffolie (151) auf eine Temperatur im Bereich zwischen 30% und 80%, vorzugsweise 40% und 70% der Schmelztemperatur des Kunststofffolienmaterials erwärmt wird.

13. Verfahren gemäß einem der Ansprüche 10 bis 12, wobei die dem Träger zugewandte Seite der Kunststofffolie (150, 151) vor dem Aufbringen auf die noch nicht oder noch nicht vollständig ausgehärtete Schicht (140) des in Schritt d) aufgebrachten strahlungshärtbaren Lackes einer Korona-Behandlung und/oder Plasma-Behandlung unterzogen wird und/oder die der Trägerplatte zugewandte Seite der Kunststofffolie (150, 151) ein Haftprimer aufgetragen wird.

14. Verfahren gemäß Anspruch 13, wobei als Haftprimer eine für das Kunststofffolienmaterial geeignetes Quellmittel und/oder Lösungsmittel aufweisende Zusammensetzung aufgetragen wird.

## Claims

1. Decorated wall or floor panel (100), comprising:
- a carrier (110);
- a primer layer (120) arranged on a surface of the carrier (110);
- a decorative layer (130) arranged on the primer layer (120);
- a layer (140) of a radiation curable lacquer arranged on the decorative layer (130);
- a structured plastic film (150, 152) arranged on the layer (140) of a radiation curable lacquer;
**characterized by**
- a cover layer (160) arranged on the structured plastic film, and **characterized in that**
the carrier (110) comprises a fiber cement material which comprises inorganic, organic, metallic, synthetic fibers or mixtures thereof and the fibers have a length in a range from ≥ 5 µm to ≤ 1500 µm.

2. Decorated wall or floor panel according to the preceding claim, wherein the primer layer (120) comprises a radiation cured urethane and/or urethane acrylate.

3. Decorated wall or floor panel according to any one of the preceding claims, wherein the decorative layer (130) comprises at least one radiation cured ink composition.

4. Decorated wall or floor panel according to any one of the preceding claims, wherein the lacquer applied onto the decorative layer (130) for forming a layer (140) of a radiation curable lacquer comprises an acrylate, a diacraylate, a methacrylate, a urethane, urethane acrylate or mixtures thereof.

5. Decorated wall or floor panel according to any one of the preceding claims, wherein the structured plastic film (150) consists of a plastic which is selected from the group consisting of polypropylene (PP), polyethylene (PE), polyethylene terephthalate (PET), polycarbonate (PC), polybutylene terephthalate (PBT), a polytrimethylene terephthalate (PTT), a copolymer or a block copolymer thereof.

6. Decorated wall or floor panel according to any one of the preceding claims, wherein the structured plastic film has a thickness between > 60 µm and ≤ 500 µm, preferably between ≥ 80 µm and ≤ 350 µm, in particular between ≥ 100 µm and ≤ 300 µm.

7. Decorated wall or floor panel according to any one of the preceding claims, wherein the structured plastic film has an embossing depth between 60 µm and 180 µm.

8. Decorated wall or floor panel according to any one of the preceding claims, wherein the lacquer applied on the structured plastic layer for forming a cover layer (160) comprises an acrylate, a diacraylate, a methacrylate, a urethane, urethane acrylate or mixtures thereof.

9. Decorated wall or floor panel according to any one of the preceding claims, wherein the panel comprises complementary locking means on at least two opposite edges, by means of which panels can be fitted together into a connected wall or floor covering.

10. Method for producing a decorated wall or floor panel (100), comprising the process steps:
a) providing a carrier (110) made of a fiber cement material, wherein the fiber cement material comprises inorganic, organic, metallic, synthetic fibers or mixtures thereof and the fibers have a length in a range from ≥ 5 µm to ≤ 1500 µm;
b) applying a primer layer (120)onto a surface of the provided carrier;
c) applying a decorative layer (130) onto the primer layer applied in step b) by means of a direct printing process;
d) applying a layer (140) of a radiation curable lacquer onto the decorative layer applied in step c);
subsequently either
e1) applying a non-structured plastic film (151) onto the not yet or not yet completely cured layer (140) of the radiation curable lacquer applied in step d);
e2) curing the layer (140) of the radiation curable lacquer applied in step d) by the action of suitable electromagnetic radiation, wherein the plastic film (151) applied in step e1) is bonded to the remaining layer structure;
e3) structuring the non-structured plastic film (151) applied in step e1) by means of an embossing means in order to form a structured plastic film (152); or
e1') applying a structured plastic film (150) onto the not yet or not yet completely cured layer (140) of the radiation curable lacquer applied in step d);
e2') curing the layer (140) of the radiation curable lacquer applied in step d) by the action of suitable electromagnetic radiation, wherein the plastic film (150) applied in step e1') is bonded to the remaining layer structure;
subsequently
f) applying at least one cover layer (160) made of a radiation curable lacquer onto the structured plastic film; and
g) curing the at least one cover layer (160) applied in step f).

11. Method according to claim 10, wherein as the embossing means in step e3) an embossing roller, an embossing plate or a die with an embossing depth is used which is less than the thickness of the plastic film (151) applied in step e1).

12. Method according to any one of claims 10 or 11, wherein step e3) is implemented by the action of heat and the action of heat is controlled such that the plastic film (151) is heated to a temperature in the range between 30% and 80%, preferably 40% and 70%, of the melting temperature of the plastic film material.

13. Method according to any one of claims 10 to 12, wherein the side of the plastic film (150, 151) facing the carrier is subjected to a corona treatment and/or plasma treatment and/or onto the side of the plastic film (150, 151) facing the carrier an adhesive primer is applied before the plastic film is applied onto the not yet or not yet completely cured layer (140) of the radiation curable lacquer applied in step d).

14. Method according to claim 13, wherein as the adhesive primer a composition is applied which comprises a swelling agent and/or a solvent suited for the plastic film material.

## Revendications

1. Panneau mural ou de sol (100) décoré, présentant
- un support (110) ;
- une couche de primaire (120) appliquée sur une surface du support (110),
- une couche de décor (130) disposée sur la couche de primaire (120),
- une couche (140) d'une laque durcissable par rayonnement disposée sur la couche de décor (130),
- un film en matière plastique (150, 152) structuré disposé sur la couche (140) d'une laque durcissable par rayonnement, **caractérisé par**
- une couche de laque de recouvrement (160) disposée sur le film en matière plastique structuré,
et que le support (110) présente un matériau de ciment de fibres, lequel présente des fibres inorganiques, organiques, métalliques, synthétiques ou des mélanges de celles-ci et les fibres présentent une longueur dans une plage ≥ 5 µm à ≤ 1500 µm.

2. Panneau mural ou de sol décoré selon l'une des revendications précédentes, dans lequel la couche de primaire (120) présente un uréthane et/ou un acrylate d'uréthane durcissable par rayonnement.

3. Panneau mural ou de sol décoré selon l'une des revendications précédentes, dans lequel la couche de décor (130) présente au moins une composition d'encre durcie par rayonnement.

4. Panneau mural ou de sol décoré selon l'une des revendications précédentes, dans lequel la laque rapportée sur la couche de décor (130) pour la formation d'une couche (140) d'une laque durcissable par rayonnement, présente un acrylate, un diacrylate, un méthacrylate, un uréthane, un acrylate d'uréthane ou des mélanges de ceux-ci.

5. Panneau mural ou de sol décoré selon l'une des revendications précédentes, dans lequel le film en matière plastique (150) structuré est constitué d'une matière plastique, laquelle est choisie dans le groupe constitué du polypropylène (PP), du polyéthylène (PE), du polyéthylène téréphtalate (PET), du polycarbonate (PC), du polybutyl téréphtalate (PBT), d'un polytriméthylène téréphtalate (PTT), d'un copolymère ou d'un copolymère bloc de ceux-ci.

6. Panneau mural ou de sol décoré selon l'une des revendications précédentes, dans lequel le film en matière plastique structuré présente une épaisseur entre > 60 µm et ≤ 500 µm, de préférence entre ≥ 80 µm et ≤ 350 µm, notamment entre ≥ 100 µm et ≤ 300 µm.

7. Panneau mural ou de sol décoré selon l'une des revendications précédentes, dans lequel le film en matière plastique structuré présente une profondeur de gaufrage entre 60 µm et 180 µm.

8. Panneau mural ou de sol décoré selon l'une des revendications précédentes, dans lequel la laque appliquée sur la couche de matière plastique structurée pour la réalisation d'une couche de laque de revêtement (160) présente un acrylate, un diacrylate, un méthacrylate, un uréthane, un acrylate d'uréthane ou des mélanges de ceux-ci.

9. Panneau mural ou de sol décoré selon l'une des revendications précédentes, où le panneau présente des moyens de verrouillage au moins au niveau de deux arêtes complémentaires se situant l'une en face de l'autre, au moyen desquels des panneaux peuvent être assemblés pour constituer un revêtement mural ou de sol assemblé.

10. Procédé de fabrication d'un panneau mural ou de sol (100) décoré, présentant les étapes de procédé :
a) de mise au point d'un support (110) à base d'un matériau de ciment de fibres, où le matériau de ciment de fibres présente des fibres inorganiques, organiques, métalliques, synthétiques ou des mélanges de celles-ci et les fibres présentent une longueur dans une plage ≥ 5 µm à ≤ 1500 µm ;
b) d'application d'une couche de primaire (120) sur une surface du support mis au point ;
c) d'application d'une couche de décor (130) sur la couche de primaire appliquée dans l'étape b) au moyen d'un procédé d'impression directe ;
d) d'application d'une couche (140) d'une laque durcissable par rayonnement sur la couche de décor appliquée dans l'étape c) ;
ensuite soit
e1) l'application d'un film en matière plastique (151) non structuré sur la couche (140) pas encore durcie ou pas encore totalement durcie de laque durcissable par rayonnement appliquée dans l'étape d) ;
e2) le durcissement de la couche (140) appliqué dans l'étape d) d'une laque durcissable par rayonnement au moyen de l'effet d'un rayonnement électromagnétique approprié, où le film de matière plastique (151) appliqué dans l'étape e1) est lié à la structure en couche restante ;
e3) la structuration du film de matière plastique (151) non structuré appliqué dans l'étape e1) par un produit de gaufrage pour la formation d'un film de matière plastique (152) structuré ;
soit
e1') l'application d'un film en matière plastique (150) structuré sur la couche (140) pas encore durcie ou pas encore totalement durcie de laque durcissable par rayonnement appliquée dans l'étape d) ;
e2') le durcissement de la couche (140) appliquée dans l'étape d) d'une laque durcissable par rayonnement au moyen de l'effet d'un rayonnement électromagnétique approprié, où le film de matière plastique (150) appliqué dans l'étape e1') est lié à la structure en couche restante ;
ensuite
f) l'application d'au moins une couche de recouvrement (160) à base d'une laque durcissable par rayonnement sur le film en matière plastique structuré ; et
g) le durcissement de l'au moins une couche de recouvrement (160) appliquée dans l'étape f).

11. Procédé selon la revendication 10, dans lequel, en tant que moyen de gaufrage, on emploie un rouleau de gaufrage, une tôle de gaufrage ou un tampon de gaufrage avec une profondeur de gaufrage qui est inférieure à l'épaisseur du film de matière plastique (151) appliqué dans l'étape e1).

12. Procédé selon l'une des revendications 10 ou 11, dans lequel l'étape e3) a lieu sous l'influence de la chaleur et l'effet de la chaleur est commandé de telle manière que le film de matière plastique (151) est chauffé à une température dans la plage entre 30 % et 80 %, de préférence entre 40 % et 70 %, de la température de fusion du matériau du film de matière plastique.

13. Procédé selon l'une des revendications 10 à 12, dans lequel la face du film de matière plastique (150, 151) orientée vers le support est soumise à un traitement Corona et/ou à un traitement au plasma avant l'application sur la couche (140) de laque durcissable par rayonnement appliquée dans l'étape d) non encore durcie ou non encore durcie totalement, et/ou la face du film de matière plastique (150, 151) orientée vers la plaque support est revêtue d'un primaire d'adhésion.

14. Procédé selon la revendication 13, dans lequel un produit gélifiant approprié pour le matériau de film de matière plastique et/ou une composition présentant des solvants sont appliqués pour servir de primaire d'adhésion.
